# EUROPEAN PATENT APPLICATION

(11) **EP 4 318 515 A1**
(43) Date of publication of application: **07.02.2024**
(21) Application number: 22780353.3
(22) Date of filing: 23.03.2022
(51) Int. Cl.: H01G 11/70, H01G 11/74, H01M 10/0587, H01M 50/533, H01M 50/536, H01M 50/538, H01M 50/586, H01M 50/591

(54) **POWER STORAGE DEVICE**

(30) Priority: 30.03.2021 JP 2021058190
(71) Applicant: Panasonic Intellectual Property Management Co., Ltd., Kadoma-shi, Osaka 571-0057 (JP)
(72) Inventor: KOZUKI, Kiyomi, Kadoma-shi, Osaka 571-0057 (JP); GESHI, Shinya, Kadoma-shi, Osaka 571-0057 (JP); SAKAMOTO, Shinichi, Kadoma-shi, Osaka 571-0057 (JP)
(74) Representative: Novagraaf International SA
(86) International application number: PCT/JP2022/013358
(87) International publication number: WO 2022/210138

(57) **Abstract**

A power storage device includes: a first electrode including a first current collector having an elongated sheet shape and a first active material layer supported on the first current collector; a second electrode including a second current collector having an elongated sheet shape and a second active material layer supported on the second current collector; a separator interposed between the first electrode and the second electrode; a non-aqueous electrolyte; and a first current collecting plate electrically connected to the first current collector, wherein the first electrode, the second electrode, and the separator constitute a columnar wound body, a first end in a longitudinal direction of the first current collector is a first exposed part not having the first active material layer and protruding from a first end surface of the wound body, a first tab extends from the first exposed part, the first tab covers at least a part of the first exposed part on an inner peripheral side inside the first tab, and the first current collector plate is welded to the first exposed part on an inner peripheral side inside the first tab via the first tab.

## Description

### TECHNICAL FIELD

The present disclosure relates to a power storage device.

### BACKGROUND ART

Patent Literature 1 proposes, as an example of a power storage device, a secondary battery including an electrode group in which a positive electrode and a negative electrode are located with a separator interposed therebetween, a case in which the electrode group is incorporated, a cap assembly coupled to the case to seal the case and electrically connected to the electrode group, a current collecting plate electrically connected to at least one of the positive electrode and the negative electrode, and an auxiliary current collecting plate installed between at least one electrode of the positive electrode and the negative electrode and a current collecting plate corresponding to the electrode.

### Citation List

### Patent Literature

PTL 1: Unexamined Japanese Patent Publication No. 2005-332820

### SUMMARY OF THE INVENTION

### Technical problem

As a current collecting structure for obtaining a high output, a so-called end surface current collecting structure has been studied. The end surface current collecting structure generally refers to a structure in which an exposed part of a current collector protrudes from an end surface of a wound body of an electrode and is welded to a current collecting plate. The end surface current collecting structure needs to suppress damage to the separator or the electrode due to spatter during welding.

In a case where an auxiliary current collecting plate is disposed between an electrode and a current collector plate as in Patent Literature 1, alignment of the auxiliary current collecting plate is important. Misalignment of the auxiliary current collecting plate causes a decrease in reliability in joining the current collecting plate and electrode by welding via the auxiliary current collecting plate.

### Solution to problem

An aspect of the present disclosure relates to a power storage device, including: a first electrode including a first current collector having an elongated sheet shape and a first active material layer supported on the first current collector; a second electrode including a second current collector having an elongated sheet shape and a second active material layer supported on the second current collector; a separator interposed between the first electrode and the second electrode; a non-aqueous electrolyte; and a first current collecting plate electrically connected to the first current collector, wherein the first electrode, the second electrode, and the separator constitute a columnar wound body, a first end of the first current collector in a longitudinal direction is a first exposed part not having the first active material layer and protruding from a first end surface of the wound body, a first tab extends from the first exposed part, the first tab covers at least a part of the first exposed part on an inner peripheral side inside the first tab, and the first current collector plate is welded to the first exposed part on an inner peripheral side inside the first tab via the first tab.

Another aspect of the present disclosure relates to a power storage device, including: a first electrode including a first current collector having an elongated sheet shape and a first active material layer supported on the first current collector; a second electrode including a second current collector having an elongated sheet shape and a second active material layer supported on the second current collector; a separator interposed between the first electrode and the second electrode; a non-aqueous electrolyte; and a first current collecting plate electrically connected to the first current collector, wherein the first electrode, the second electrode, and the separator constitute a columnar wound body, a first end of the first current collector in a longitudinal direction is a first exposed part not having the first active material layer and protruding from a first end surface of the wound body, a first tab extends from the first exposed part, the first tab covers at least a part of the first exposed part on an outer peripheral side inside the first tab, and the first current collector plate is welded to the first exposed part on an outer peripheral side inside the first tab via the first tab.

### Advantageous effect of invention

With the power storage device of the present disclosure, reliability in joining of a current collecting plate and an electrode is improved.

### BRIEF DESCRIPTION OF THE DRAWINGS

Fig. 1 is a perspective view showing an appearance of a wound body included in a power storage device according to an exemplary embodiment of the present disclosure.
Fig. 2 is a plan view showing a configuration of a positive electrode.
Part (a) of Fig. 3 is a plan view and part (b) of Fig. 3 is a longitudinal sectional view showing a configuration of another positive electrode.
Fig. 4 is a plan view showing a configuration of a negative electrode.
Part (a) of Fig. 5 is a plan view and part (b) of Fig. 5 is a longitudinal sectional view showing a configuration of another negative electrode.
Fig. 6 is a view of a plurality of tabs bent to cover an end surface of the wound body as viewed from an axial direction of the wound body.
Fig. 7 is a view of a current collecting plate disposed on an end surface of the wound body as viewed from an axial direction of the wound body.
Fig. 8 is a longitudinal sectional view showing a configuration of the power storage device according to an exemplary embodiment of the present disclosure.
Fig. 9 is an enlarged view of a main part of Fig. 8.
Fig. 10 is a conceptual diagram showing a part of variations of the electrode.

### DESCRIPTION OF EMBODIMENT

Hereinafter, exemplary embodiments of the present disclosure will be described. Note that, in the following description, exemplary embodiments of the present disclosure will be described by way of examples, but the present disclosure is not limited to the examples described below. In the following description, specific numerical values, materials, and the like may be exemplified, but other numerical values, materials, and the like may be applied as long as the effect of the present disclosure can be obtained.

A power storage device according to the present disclosure includes a first electrode having an elongated sheet shape, a second electrode having an elongated sheet shape, a separator interposed between the first electrode and the second electrode, and a non-aqueous electrolyte. The first electrode, the second electrode, and the separator constitute a columnar wound body. That is, the first electrode and the second electrode are wound with the separator interposed therebetween.

The first electrode includes a first current collector having an elongated sheet shape and a first active material layer supported on the first current collector. The second electrode includes a second current collector having an elongated sheet shape and a second active material layer supported on the second current collector.

The power storage device according to the present disclosure has a so-called end surface current collecting structure. That is, the power storage device according to the present disclosure may include a first current collecting plate electrically connected to the first electrode, and may further include a second current collecting plate electrically connected to the second electrode. The first current collecting plate is electrically connected to the first current collector. The second current collecting plate is electrically connected to the second current collector.

A first end (first end in a width direction) of the first current collector in a longitudinal direction is a first exposed part having no first active material layer, and the first exposed part protrudes from a first end surface of the wound body. Further, a first end (first end in a width direction) of the second current collector in a longitudinal direction is a second exposed part having no second active material layer, and the second exposed par may protrude from a second end surface of the wound body. Note that a second end of the first current collector in the longitudinal direction may be a third exposed part having no first active material layer, or a second end of the second current collector in the longitudinal direction may be a fourth exposed part having no second active material layer. In this case, the third exposed part and the fourth exposed part usually do not protrude from the end surface of the wound body, and are usually covered and protected by an insulating member.

A first tab extends from the first exposed part, and the first tab covers at least a part of the first exposed part on the inner peripheral side inside the first tab. The first tab is a part protruding from a part of the first end of the first current collector in the longitudinal direction (that is, a part of the first exposed part). The first current collecting plate is welded to a position of the first exposed part on the inner peripheral side inside the first tab via the first tab. A joint is formed between the first current collecting plate and the first exposed part, the joint corresponding to at least a part (usually a part) of the first current collecting plate. The joint may have, for example, a linear shape, a spot shape, or the like. Note that the first tab may cover at least a part of the outer peripheral side inside the first tab and be welded to a position on the outer peripheral side outside the first tab via the first tab. Here, in a case where the first tab covers at least a part of the inner peripheral side of the first exposed part and is welded, the dead space in the center of the wound body can be easily reduced as compared with a case where the first tab covers at least a part of the outer peripheral side of the first exposed part and is welded. In the first electrode, the first tab may extend toward the inner peripheral side, and in the second electrode, the second tab may extend toward the outer peripheral side. This configuration makes it possible to suppress the deviation of the current collection path of the current flowing in the wound body.

The second tab may extend from the second exposed part, and the second tab may cover at least a part of the second exposed part on the inner peripheral side inside the second tab. The second tab is a part protruding from a part of the first end of the second current collector in the longitudinal direction (that is, a part of the second exposed part). In this case, the second current collecting plate is welded to the second exposed part on the inner peripheral side inside the second tab via the second tab. A joint is formed between the second current collecting plate and the second exposed part, the joint corresponding to at least a part (usually a part) of the second current collecting plate. Here, the joint may as well have, for example, a linear shape, a spot shape, or the like. Similar to the first tab, the second tab may also cover at least a part of the outer peripheral side outside the second tab and be welded to a position on the outer peripheral side outside the second tab via the second tab. Note that in the power storage device of the present disclosure, the tab may be formed on at least one of the first and the second electrodes. Therefore, the other of the first and the second electrodes may not have an exposed part or a tab and may be collected via a ribbon-shaped or linear lead member.

Hereinafter, the first electrode and the second electrode may be simply referred to as an electrode without distinction. In addition, the first current collector and the second current collector may be simply referred to as a current collector without distinction, and the first active material layer and the second active material layer may be simply referred to as an active material layer without distinction. In addition, the first current collecting plate and the second current collecting plate may be simply referred to as a current collecting plate without distinction. In addition, the first to the fourth exposed parts may be simply referred to as an exposed part without distinction. The first tab and the second tab may be simply referred to as a tab without distinction.

The power storage device according to the present disclosure has the following advantages.

First, the presence of the tab can prevent spatter generated on the current collecting plate during welding from entering the wound body. It is easy to suppress damage and micro-short circuit of the insulating member such as the separator caused by spatter or the like during welding on the end surface of the wound body.

Second, the presence of the tab facilitates positioning of each member on the end surface of the wound body in a manufacturing process of the power storage device, as compared with a power storage device in which a current collecting member interposed between a current collecting plate such as an auxiliary current collecting plate and the wound body is housed in a case separately from the current collecting plate and the wound body. Since the tab extends from the exposed part of the current collector, a positional relationship between the tab and the exposed part protruding from the end surface of the wound body is limited. Thus, misalignment of a positional relationship between the current collecting plate and the tab is also easily improved.

Third, the presence of the tab makes it possible to efficiently collect current to the current collecting plate from a more outer peripheral side (for example, even from the outermost periphery) or from a more inner peripheral side of the exposed part on the end surface of the wound body. For example, in a case where the tab extends from the exposed part on the outer peripheral side outside the midpoint of the line segment connecting the center of the end surface of the wound body and the point on the outermost periphery of the exposed part, the region of the exposed part on the inner peripheral side inside the tab is sufficiently larger. In particular, in a case where the tab extends from the outermost periphery of the exposed part, the tab can widely cover a region on the inner peripheral side of the exposed part inside the outermost periphery. That is, the current collecting plate can be welded to a part close to the outermost periphery of the exposed part via the tab. In other words, on the end surface of the wound body, current can be efficiently collected to the current collecting plate from a wide region including the outermost periphery of the electrode.

In addition, when the tab covers the inner peripheral side of the exposed part, the exposed part is urged to bend to fall toward the inner peripheral side. As a result, an area where the exposed part is covered with the tab is increased, and a welding area between the current collecting plate and the exposed part can also be increased. Therefore, the current collection efficiency is improved, and the mechanical strength of the welded part can be improved. Furthermore, in a case where spatter during welding of the current collecting plate and the exposed part is scattered, the exposed part bent to fall toward the inner peripheral side, further suppressing contact of the spatter with the separator or the like in the wound body.

The tab may be a member separate from or continuous with the exposed part of the current collector. The tab and the exposed part may be cut out from one material (for example, metal foil) integrally with the current collector. In other words, the tab may be formed of a part of the current collector.

The current collecting plate desirably has a considerable thickness from the viewpoint of securing the ability to collect a relatively large current. On the other hand, the most important role of the tab is to suppress spatter during welding, and the tab may be thinner than the current collecting plates as long as the tab can assist current collection. Thickness T1 of the current collecting plate is, for example, 100 µm or more and 1000 µm or less. On the other hand, thickness T2 of the tab is, for example, 5 µm or more and 100 µm or less. The ratio of thickness T1 of the current collecting plate to thickness T2 of the tab, T1/T2, is, for example, 20 or more and 60 or less.

A plurality of tabs may extend from the exposed part. In this case, the plurality of tabs may cover the inner peripheral side of the exposed part, for example, in a radially or an angularly equivalent arrangement. Providing the plurality of tabs improves the balance of current collection from the entire wound body, and improves the shape balance of the wound body as well. Note that the angularly equivalent arrangement is not strictly defined, but means that the arrangement is generally targeted with respect to the center. Specifically, the tabs adjacent to each other may be disposed to form a central angle (for example, 2 ≤ n ≤ 6) of 360/n ± 5°.

The number of tabs extending from the exposed part of the current collector may be one or more, but may be two or more and eight or less, two or more and six or less, three or more and six or less, or four. The number of tabs may be determined according to the number of welded parts (joints) welded to the exposed part on the inner peripheral side via the tabs. From the viewpoint of simplifying the welding process, it is desirable that the number of tabs extending from the exposed part be one or more and four or less.

For example, in a case where four tabs radially extend from the exposed part, the current collecting plate may have a cross shape as viewed from an axial direction of the wound body.

A linear first insulating layer may be formed at a boundary between the first exposed part and the first active material layer. Similarly, a linear second insulating layer may be formed at a boundary between the second exposed part and the second active material layer. That is, at least one of the boundary between the first exposed part and the first active material layer and the boundary between the second exposed part and the second active material layer may be protected by the linear first and/or the linear second insulating layers. In this case, it is possible to more reliably suppress a micro-short circuit due to spatter during welding. Similarly, from the viewpoint of more reliably suppressing the micro-short circuit, a third insulating layer may be formed on the second end of the first electrode in the longitudinal direction, and a fourth insulating layer may be formed on the second end of the second electrode in the longitudinal direction. Hereinafter, the first to the fourth insulating layers may be simply referred to as an insulating layer without distinction.

The tab may be formed by cutting out a part of the outermost periphery of the current collector, leaving a continuous part, and folding back the continuous part to the end surface side of the wound body. In this case, since two tabs are formed by the cutout portion of the current collector, waste of material is reduced.

The power storage device according to the present disclosure is suitable for being configured as, for example, a non-aqueous electrolyte secondary battery, an alkaline secondary battery, or a capacitor, and contributes to high output of the non-aqueous electrolyte battery. The non-aqueous electrolyte battery includes a lithium ion secondary battery, an all-solid-state battery, and the like. In this case, one of the first electrode and the second electrode is a positive electrode, and the other is a negative electrode. One of the first current collector and the second current collector is, for example, a positive electrode current collector formed of aluminum or an aluminum alloy, and the other is, for example, a negative electrode current collector formed of copper or a copper alloy.

The exposed part of the current collector and the current collecting plate is joined by, for example, laser welding. For example, the laser may be radiated to a plurality of places radially from the opposite side of the surface of the current collecting plate facing the end surface of the wound body. At this time, it is necessary to align the current collecting plate and the tab, and such alignment can be easily performed.

Hereinafter, a lithium ion secondary battery which is an example of the power storage device according to the present exemplary embodiment will be described more specifically with reference to the drawings.

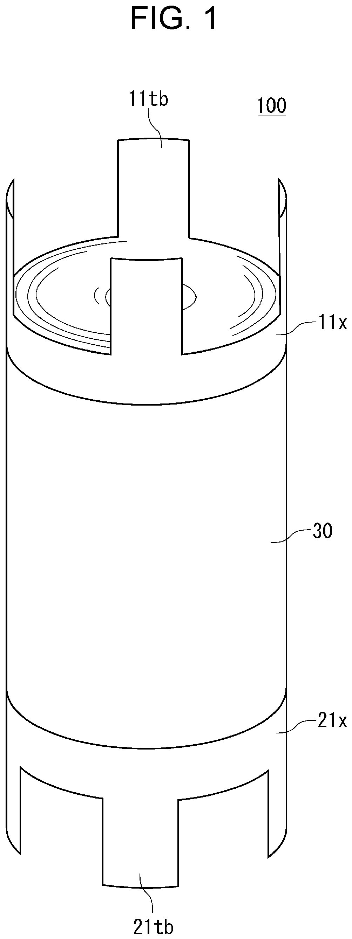

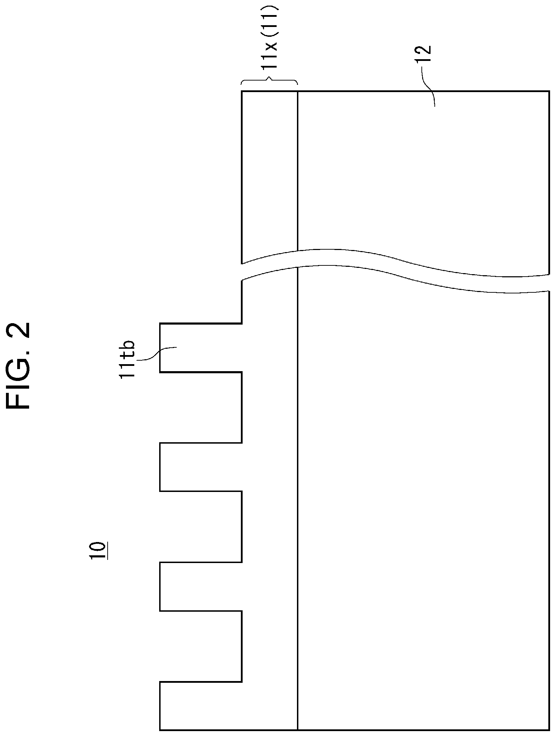

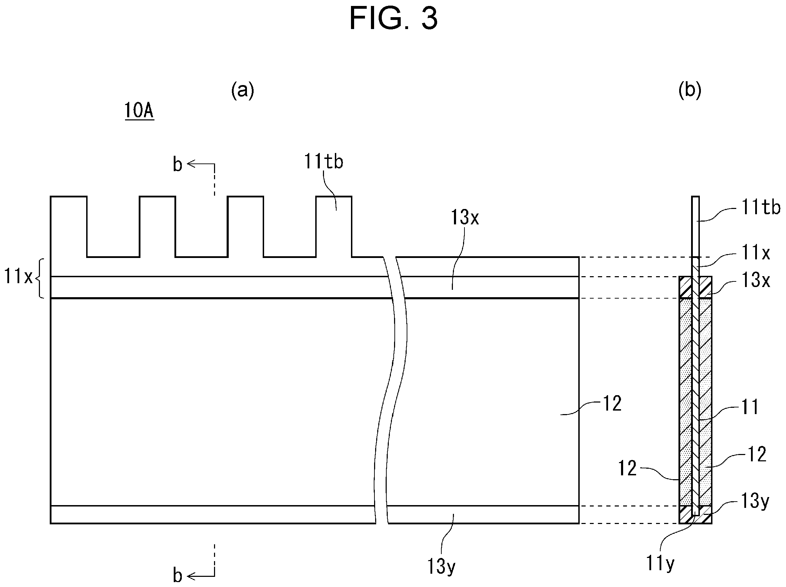

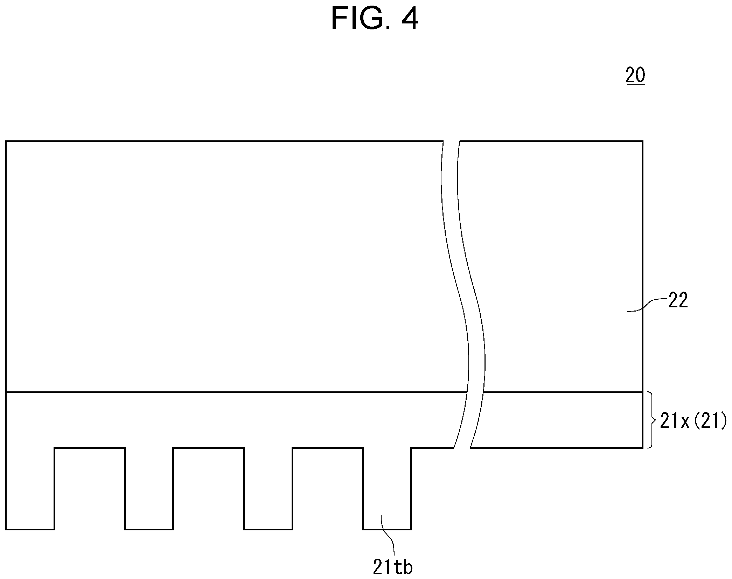

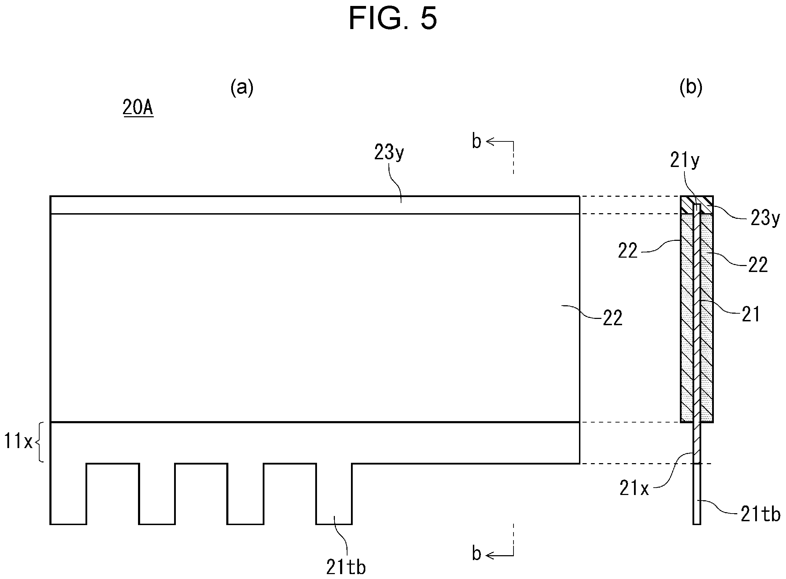

Fig. 1 is a perspective view showing an appearance of wound body 100 according to the present exemplary embodiment. Fig. 2 is a plan view showing a configuration of positive electrode 10. Fig. 3 is a plan view showing a configuration of another positive electrode 10A. Fig. 4 is a plan view showing a configuration of negative electrode 20. Fig. 5 is a plan view showing a configuration of another negative electrode 20A.

Hereinafter, one of the positive electrode and the negative electrode may be referred to as a first electrode and the other may be referred to as a second electrode, one of the positive electrode current collector and the negative electrode current collector may be referred to as a first current collector and the other may be referred to as a second current collector, one of the positive electrode active material layer and the negative electrode active material layer may be referred to as a first active material layer and the other may be referred to as a second active material layer, one of the positive electrode current collector exposed part and the negative electrode current collector exposed part may be referred to as a first exposed part and the other referred to as a second exposed part, one of the positive electrode current collecting plate and the negative electrode current collecting plate may be referred to as a first current collecting plate and the other referred to as a second current collecting plate, and one of the positive electrode current collecting tab and the negative electrode current collecting tab may be referred to as a first tab and the other may be referred to as a second tab.

Positive electrode 10 has an elongated sheet shape, and as shown in Fig. 2, includes positive electrode current collector 11 and positive electrode active material layer 12 supported on positive electrode current collector 11. Positive electrode active material layer 12 is formed on both surfaces of positive electrode current collector 11. Here, positive electrode current collector exposed part 11x having no positive electrode active material layer 12 is formed on the first end of positive electrode current collector 11 in the longitudinal direction. An exposed part other than positive electrode current collector exposed part 11x having no positive electrode active material layer 12 may be formed. Four positive electrode current collecting tabs 11tb extend from a part corresponding to the outermost periphery of positive electrode current collector exposed part 11x. Positive electrode current collecting tab 11tb and positive electrode current collector exposed part 11x are cut out from a sheet-shaped metallic material integrally with positive electrode current collector 11.

A sheet-shaped metallic material is used for positive electrode current collector 11. The sheet-shaped metallic material may be a metal foil, a metal porous body, an etching metal, or the like. As the metallic material, aluminum, an aluminum alloy, nickel, titanium, or the like may be used. A thickness of positive electrode current collector 11 is, for example, 10 µm to 100 µm.

Positive electrode active material layer 12 contains, for example, a positive active material, a conductive material, and a binding material. Positive electrode active material layer 12 is obtained, for example, by applying a positive electrode mixture slurry containing a positive electrode active material, a conductive material, and a binding material to both surfaces of positive electrode current collector 11, drying the applied film, and then rolling the applied film. The positive electrode active material is a material that occludes and releases lithium ions. Examples of the positive electrode active material include lithium-containing transition metal oxides, transition metal fluorides, polyanions, fluorinated polyanions, and transition metal sulfides.

Part (a) of Fig. 3 is a plan view and part (b) of Fig. 3 is a longitudinal sectional view showing a configuration of another positive electrode 10A. Positive electrode 10A has positive electrode current collector exposed part 11x having no positive electrode active material layer 12 on the first end of positive electrode current collector 11 in the longitudinal direction, and has positive electrode current collector exposed part 11y having no positive electrode active material layer 12 on the second end in the longitudinal direction. Four positive electrode current collecting tabs 11tb extend from a part corresponding to the outermost periphery of positive electrode current collector exposed part 11x. Positive electrode current collecting tab 11tb and positive electrode current collector exposed part 11x are cut out from a sheet-shaped metallic material integrally with positive electrode current collector 11. A boundary between positive electrode current collector exposed part 11x and positive electrode active material layer 12 is covered with linear first insulating layer 13x. Positive electrode current collector exposed part 11y is covered with linear third insulating layer 13y so as not to be entirely exposed.

Negative electrode 20 has an elongated sheet shape, and as shown in Fig. 4, includes negative electrode current collector 21 and negative electrode active material layer 22 supported on negative electrode current collector 21. Negative electrode active material layer 22 is formed on both surfaces of negative electrode current collector 21. Here, negative electrode current collector exposed part 21x having no negative electrode active material layer 22 is formed on the first end of negative electrode current collector 21 in the longitudinal direction. An exposed part other than negative electrode current collector exposed part 21x having no negative electrode active material layer 22 may be formed. Four negative electrode current collecting tabs 21tb extend from a part corresponding to the outermost periphery of negative electrode current collector exposed part 21x. Negative electrode current collecting tab 21tb and negative electrode current collector exposed part 21x are cut out from a sheet-shaped metallic material integrally with negative electrode current collector 21.

A sheet-shaped metallic material is used for negative electrode current collector 21. The sheet-shaped metallic material may be a metal foil, a metal porous body, an etching metal, or the like. As the metallic material, copper, a copper alloy, nickel, stainless steel, or the like may be used. The thickness of negative electrode current collector 21 is, for example, in a range from 10 µm to 100 µm inclusive.

Negative electrode active material layer 22 contains, for example, a negative electrode active material, a conductive material, and a binding agent. Negative electrode active material layer 22 is obtained, for example, by applying a negative electrode mixture slurry containing a negative electrode active material, a conductive material, and a binding material to both surfaces of negative electrode current collector 21, drying the applied film, and then rolling the applied film. The negative electrode active material is a material that occludes and releases lithium ions. Examples of the negative electrode active material include a carbon material, a metal compound, an alloy, and a ceramic material.

Part (a) of Fig. 5 is a plan view and part (b) of Fig. 5 is a longitudinal sectional view showing a configuration of another negative electrode 20A. Negative electrode 20A has negative electrode current collector exposed part 21x having no negative electrode active material layer 22 on the first end of negative electrode current collector 21 in the longitudinal direction, and has negative electrode current collector exposed part 21y having no negative electrode active material layer 22 on the second end in the longitudinal direction. Four negative electrode current collecting tabs 21tb extend from a part corresponding to the outermost periphery of negative electrode current collector exposed part 21x. Negative electrode current collecting tab 21tb and negative electrode current collector exposed part 21x are cut out from a sheet-shaped metallic material integrally with negative electrode current collector 21. Negative electrode current collector exposed part 21y is covered with linear fourth insulating layer 23y so as not to be entirely exposed. In the shown example, the second insulating layer may be provided or may be not provided on the boundary between negative electrode current collector exposed part 21x and negative electrode active material layer 22.

Wound body 100 in Fig. 1 is formed in a columnar shape by winding positive electrode 10 and negative electrode 20 with separator 30 interposed therebetween. The position is aligned so that positive electrode current collector exposed part 11x protrudes from a first end surface of wound body 100, and negative electrode current collector exposed part 21x protrudes from a second end surface of wound body 100 during winding. Separator 30 is wound around the outermost periphery of wound body 100. Fig. 1 shows a state before positive electrode current collecting tab 1 1tb and negative electrode current collecting tab 21tb respectively cover the inner peripheral side of positive electrode current collector exposed part 11x inside positive electrode current collecting tab 1 1tb and the inner peripheral side of negative electrode current collector exposed part 21x inside negative electrode current collecting tab 21tb. In wound body 100, positive electrode current collector exposed part 11x and negative electrode current collector exposed part 21x protrude in opposite directions, but positive electrode current collector exposed part 11x and negative electrode current collector exposed part 21x may protrude in the same direction on the first end surface of the wound body. In such a case, it is preferable, in each of positive electrode current collector exposed part 11x and negative electrode current collector exposed part 21x, to cut out a portion opposite to a part from which the current collector exposed part of the opposite electrode protrudes.

As the separator, for example, a microporous membrane made of a resin such as polyolefin, a woven fabric, a nonwoven fabric, or the like may be used. The thickness of the separator is, for example, in a range from 10 µm to 300 µm inclusive, preferably from 10 µm to 40 µm inclusive.

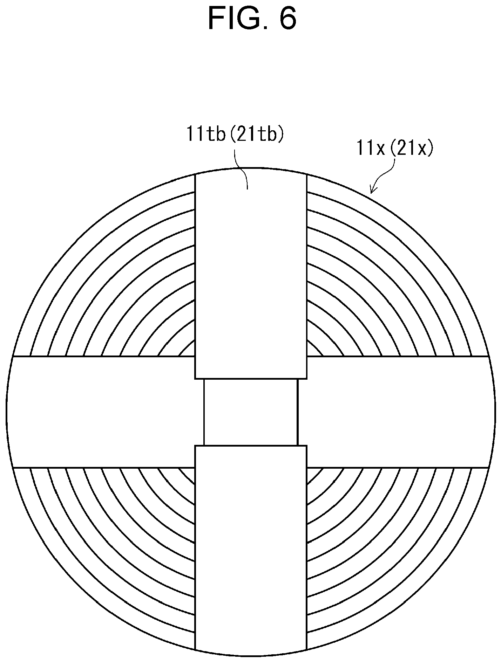

Fig. 6 shows a state in which positive electrode current collecting tab 11tb or negative electrode current collecting tab 21tb covers the inner peripheral side of positive electrode current collector exposed part 11x inside positive electrode current collecting tab 11tb or the inner peripheral side of negative electrode current collector exposed part 21x inside negative electrode current collecting tab 21tb, as viewed from the axial direction of the wound body. That is, positive electrode current collecting tab 11tb or negative electrode current collecting tab 21tb is bent to cover the first end surface or the second end surface of wound body 100. Four positive electrode current collecting tabs 11tb or four negative electrode current collecting tabs 21tb radially (in an equivalent arrangement with a central angle of 90°) cover the inner peripheral side of positive electrode current collector exposed part 11x or the inner peripheral side of negative electrode current collector exposed part 21x.

When positive electrode current collecting tab 1 1tb or negative electrode current collecting tab 21tb is bent toward the inner peripheral side, positive electrode current collector exposed part 11x or negative electrode current collector exposed part 21x covered with positive electrode current collecting tab 1 1tb or negative electrode current collecting tab 21tb is bent to fall toward the inner peripheral side.

The protrusion length of each tab may be, for example, equal to or less than radius R of the end surface of the wound body, may be equal to or more than half of radius R, or may be equal to or more than 2/3 of radius R. In the shown example, the protrusion length of each tab is about 3/4 of radius R.

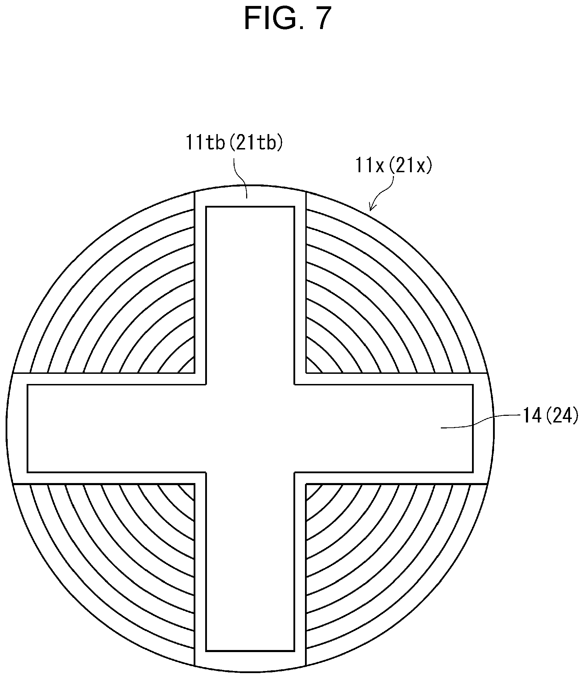

Fig. 7 is a view of positive electrode current collecting plate 14 or negative electrode current collecting plate 24 disposed on the first end surface or the second end surface of wound body 100 as viewed from the axial direction of wound body 100. The shape of positive electrode current collecting plate 14 or negative electrode current collecting plate 24 is a cross shape, the cross shape following the shape of positive electrode current collecting tab 11tb or negative electrode current collecting tab 21tb. However, the shapes of the positive electrode current collecting plate and the negative electrode current collecting plate are not particularly limited. In this state, positive electrode current collecting plate 14 is welded to positive electrode current collector exposed part 11x on the inner peripheral side inside positive electrode current collecting tab 1 1tb via positive electrode current collecting tab 1 1tb, or negative electrode current collecting plate 24 is welded to negative electrode current collector exposed part 21x on the inner peripheral side inside negative electrode current collecting tab 21tb via negative electrode current collecting tab 21tb. At the time of welding, positive electrode current collecting tab 1 1tb and negative electrode current collecting tab 21tb play a role of preventing spatter from scattering into the wound body 100. At this time, the width and the radial dimension of the current collecting plate as viewed from the axial direction may be smaller than the width and the radial dimension of the tab. With this configuration, spatter scattering and the like can be more accurately suppressed.

A material of positive electrode current collecting plate 14 is, for example, aluminum, an aluminum alloy, titanium, stainless steel, or the like. The material of the positive electrode current collecting plate may be the same as the material of positive electrode current collector 11. The material of negative electrode current collecting plate 24 is, for example, copper, a copper alloy, nickel, stainless steel, or the like. The material of negative electrode current collecting plate 24 may be the same as the material of negative electrode current collector 21.

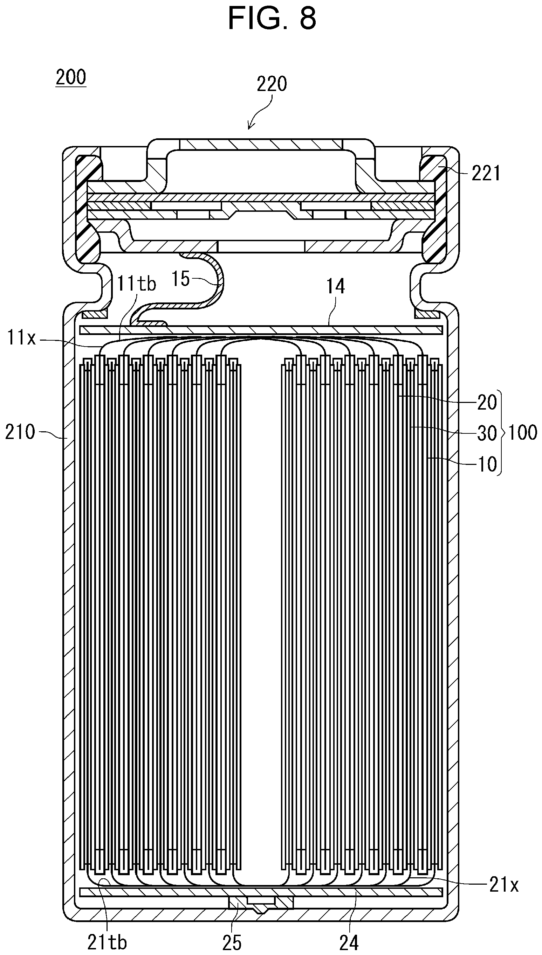

Fig. 8 is a longitudinal sectional view showing a configuration of a battery (lithium ion secondary battery) which is an example of the power storage device according to the exemplary embodiment of the present disclosure. Battery 200 includes wound body 100 formed in a columnar shape by winding positive electrode 10A and negative electrode 20A with separator 30 interposed therebetween, a non-aqueous electrolyte (not shown), bottomed metal case 210 for housing wound body 100 and the non-aqueous electrolyte, and sealing plate 220 for sealing an opening of case 210. Gasket 221 is disposed on a peripheral edge of sealing plate 220, and the inside of case 210 is sealed by caulking an opening end of case 210 to gasket 221.

The non-aqueous electrolyte has lithium ion conductivity and contains a lithium salt and a non-aqueous solvent that dissolves the lithium salt.

Positive electrode current collector exposed part 11x is in contact with a surface of positive electrode current collecting plate 14 facing the end surface of wound body 100. Positive electrode current collecting plate 14 and the inner peripheral side of positive electrode current collector exposed part 11x are welded via positive electrode current collecting tab 1 1tb extending from the outermost periphery of positive electrode current collector exposed part 11x. The other end of tab lead 15 having one end connected to positive electrode current collecting plate 14 is connected to the inner surface of sealing plate 220. Therefore, sealing plate 220 functions as an external positive electrode terminal.

On the other hand, negative electrode current collector exposed part 21x is in contact with a surface of negative electrode current collecting plate 24 facing the end surface of wound body 100. Negative electrode current collecting plate 24 and the inner peripheral side of negative electrode current collector exposed part 21x are welded via negative electrode current collecting tab 21tb extending from the outermost periphery of negative electrode current collector exposed part 21x. Negative electrode current collecting plate 24 is welded to welding member 25 provided on an inner bottom surface of case 210. Therefore, case 210 functions as an external negative-electrode terminal.

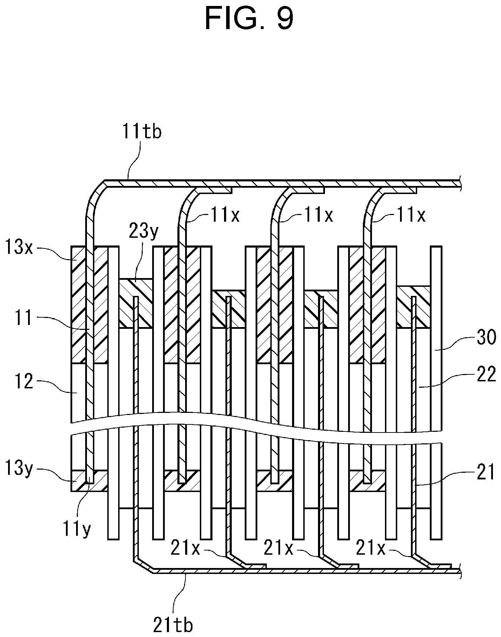

Fig. 9 is an enlarged view of a main part of Fig. 8. A boundary between positive electrode current collector exposed part 11x and positive electrode active material layer 12 is covered with first insulating layer 13x. Positive electrode current collector exposed part 11y on the opposite side of positive electrode current collector exposed part 11x is covered with third insulating layer 13y so as not to be entirely exposed. On the other hand, the boundary between negative electrode current collector exposed part 21x and negative electrode active material layer 22 is not covered with the second insulating layer, and negative electrode current collector exposed part 21y on the opposite side of negative electrode current collector exposed part 21x is covered with fourth insulating layer 23y so as not to be entirely exposed. As a result, the first end surface side of wound body 100 is entirely protected by the insulating member, except for the protruding end of positive electrode current collector exposed part 11x, and positive electrode 10A is covered by the insulating member as much as possible. As described above, by protecting positive electrode 10A particularly with the insulating member, the safety of the battery can be efficiently enhanced.

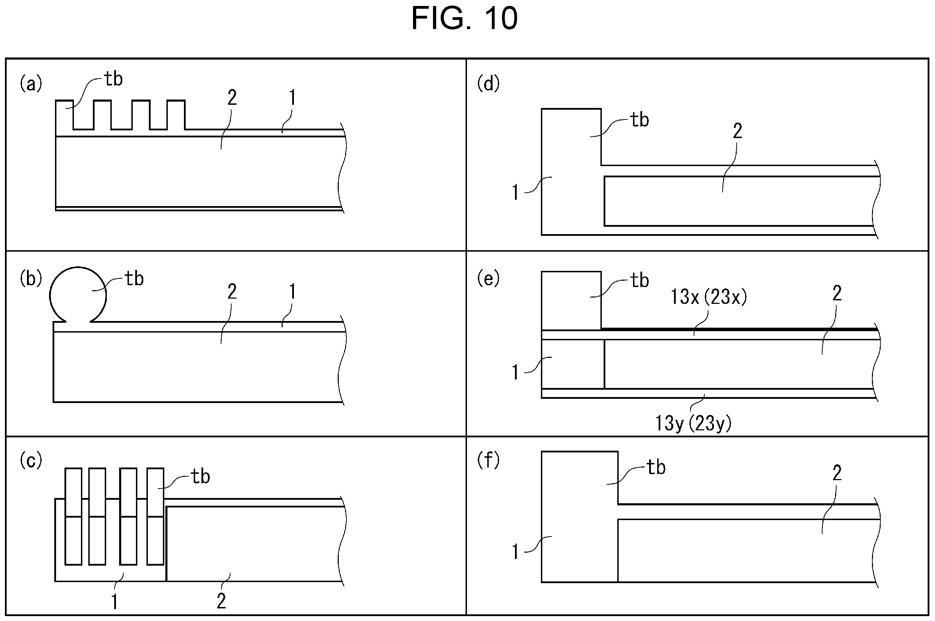

Fig. 10 is a conceptual diagram showing a part of variations of the first electrode or the second electrode. Each electrode includes current collector 1 and active material layer 2. The electrode shown in part (a) of Fig. 10 is of the same type as positive electrode 10 or negative electrode 20 shown in Fig. 2 or Fig. 4. Here, four tabs tb continuous with current collector 1 are drawn, but the number of tabs is not limited to four. The electrode shown in part (b) of Fig. 10 has one circular tab tb matching the end surface of the wound body. The diameter of circular tab tb may be formed to be smaller than or larger than the end surface of the wound body. Since, like the current collector, tab tb is usually made of a thin metallic material, insertion of tab tb into the case is not hindered when tab tb protrudes from the end surface. In the electrode of part (c) of Fig. 10, tab tb is formed by cutting out a part of the outermost periphery of current collector 1, leaving a continuous part, and folding back the continuous part to the first end surface side. In this case, it is not necessary to form active material layer 2 on the outermost periphery. In the electrodes in part (d) of Fig. 10 and part (e) of Fig. 10, the first end and the second end in the longitudinal direction of current collector 1 are both exposed parts, and in part (e) of Fig. 10, at least a part of the exposed part is protected by linear first insulating layer 13x (second insulating layer 23x) and linear third insulating layer 13y (fourth insulating layer 23y). The electrode in part (f) of Fig. 10 has the same configuration as that in part (a) or part (b) except that the shape of tab tb and the formation range of active material layer 2 are different. As described above, there are various variations of the electrode having tab tb, and the form thereof is not particularly limited.

### INDUSTRIAL APPLICABILITY

Since the power storage device according to the present disclosure has high output, the power storage device according to the present disclosure is suitable for in-vehicle use, for example.

### REFERENCE MARKS IN THE DRAWINGS

100: wound body
10, 10A: positive electrode
11: positive electrode current collector
11x, 11y: positive electrode current collector exposed part
11tb: positive electrode current collecting tab
12: positive electrode active material layer
13x: first insulating layer
13y: third insulating layer
14: positive electrode current collecting plate
15: tab lead
20, 20A: negative electrode
21: negative electrode current collector
21x, 21y: negative electrode current collector exposed part
21tb: negative electrode current collecting tab
22: negative electrode active material layer
23x: second insulating layer
23y: fourth insulating layer
24: negative electrode current collecting plate
25: welding member
30: separator
200: battery (power storage device)
210: case
220: sealing plate
221: gasket
1: current collector
2: active material layer
tb: tab

## Claims

1. A power storage device comprising:
a first electrode including a first current collector including an elongated sheet shape and a first active material layer supported on the first current collector;
a second electrode including a second current collector including an elongated sheet shape and a second active material layer supported on the second current collector;
a separator interposed between the first electrode and the second electrode;
a non-aqueous electrolyte; and
a first current collecting plate electrically connected to the first current collector,
wherein a wound body including the first electrode, the second electrode, and the separator, the wound body including a columnar shape,
a first end of the first current collector along lengthwise is a first exposed part not including the first active material layer and protruding from a first end surface of the wound body,
a first tab protrudes from the first exposed part,
the first tab covers at least a part of an inner peripheral side of the first exposed part than the first tab, and
the first current collector plate is welded to an inner peripheral side of the first exposed part than the first tab via the first tab.

2. The power storage device according to Claim 1, wherein the first tab protrudes from an outer peripheral side of the first exposed part than a midpoint of a line segment connecting a center of the first end surface of the wound body and a point on an outermost periphery of the first exposed part.

3. The power storage device according to Claim 2, wherein the first tab protrudes from an outermost periphery of the first exposed part.

4. The power storage device according to any one of Claims 1 to 3, wherein the first tab is continuous with the first exposed part.

5. The power storage device according to any one of Claims 1 to 4, wherein a plurality of first tabs protrude from the first exposed part, the plurality of first tabs including the first tab and
the first tabs radially cover an inner peripheral side of the first exposed part than the first tab.

6. The power storage device according to any one of Claims 1 to 5, wherein the first tab is thinner than the first current collecting plate.

7. The power storage device according to any one of Claims 1 to 6, wherein a first insulating layer including a linear shape is disposed on a boundary between the first exposed part and the first active material layer.

8. The power storage device according to any one of Claims 1 to 7, further comprising a second current collecting plate electrically connected to the second current collector,
wherein a first end of the second current collector along lengthwise is a second exposed part not including the second active material layer and protruding from a second end surface of the wound body,
a second tab protrudes from the second exposed part,
the second tab covers at least a part of an inner peripheral side of the second exposed part than the second tab, and
the second current collecting plate is welded to an inner peripheral side of the second exposed part than the second tab via the second tab.

9. The power storage device according to Claim 8, wherein
the second tab protrudes from an outer peripheral side of the second exposed part on than a midpoint of a line segment connecting a center of the second end surface of the wound body and a point on an outermost periphery of the second exposed part.

10. The power storage device according to Claim 9, wherein the second tab protrudes from an outermost periphery of the second exposed part.

11. The power storage device according to any one of Claims 8 to 10, wherein the second tab is continuous with the second exposed part.

12. The power storage device according to any one of Claims 8 to 11, wherein the second tab is thinner than the second current collecting plate.

13. The power storage device according to any one of Claims 8 to 12, wherein a plurality of second tabs protrude from the second exposed part, the plurality of second tabs including the second tab and
the plurality of second tabs radially cover an inner peripheral side of the second exposed part than the second tab.

14. The power storage device according to any one of Claims 8 to 13, wherein a second insulating layer including a linear shape is disposed on a boundary between the second exposed part and the second active material layer.

15. The power storage device according to any one of Claims 1 to 14, wherein the first current collecting plate or the second current collecting plate includes a cross shape as viewed along an axis of the wound body.

16. The power storage device according to any one of Claims 1 to 15, wherein a third insulating layer is disposed on a second end of the first electrode along lengthwise.

17. The power storage device according to Claim 15, wherein a fourth insulating layer is disposed on a second end of the second electrode along lengthwise.

18. The power storage device according to any one of Claims 1 to 17, wherein the first tab or the second tab is disposed by cutting out a part of an outermost periphery of the first current collector or the second current collector respectively, leaving a continuous part, and the first tab or the second tab folding back at the continuous part to a side of the first end surface or a side of the second end surface respectively.

19. A power storage device comprising:
a first electrode including a first current collector including an elongated sheet shape and a first active material layer supported on the first current collector;
a second electrode including a second current collector including an elongated sheet shape and a second active material layer supported on the second current collector;
a separator interposed between the first electrode and the second electrode;
a non-aqueous electrolyte; and
a first current collecting plate electrically connected to the first current collector,
wherein a wound body including the first electrode, the second electrode, and the separator, the wound body including a columnar shape,
a first end of the first current collector along lengthwise is a first exposed part not including the first active material layer and protruding from a first end surface of the wound body,
a first tab extends from the first exposed part,
the first tab covers at least a part of an outer peripheral side of the first exposed part than the first tab, and
the first current collector plate is welded to an outer peripheral side of the first exposed part than the first tab via the first tab.
